# EUROPÄISCHE PATENTSCHRIFT

(11) **EP 1 564 466 B1**
(45) Veröffentlichungstag und Bekanntmachung des Hinweises auf die Patenterteilung: **03.03.2010**
(21) Anmeldenummer: 04026616.5
(22) Anmeldetag: 09.11.2004
(51) Int. Cl.: F16K 31/10, F15B 13/044, F15B 13/04

(54) **Mehrwege-Doppelsitzventil mit Magnetbetätigung**
Multiple way double seat valve with magnet actuation
Soupape à siège double dans une configuration à voies multiples avec commande magnétique

(30) Priorität: 13.02.2004 DE 202004002268 U
(43) Veröffentlichungstag der Anmeldung: 17.08.2005
(73) Patentinhaber: HAWE Hydraulik SE, 81673 München (DE)
(72) Erfinder: Neumair, Georg, Dipl.-Ing. (FH), 85402 Thalhausen (DE)
(74) Vertreter: Grünecker, Kinkeldey, Stockmair & Schwanhäusser Anwaltssozietät

(56) Entgegenhaltungen:
- EP-A- 1 036 965
- EP-A- 1 039 182
- DE-C- 19 833 744
- US-A- 2 600 872
- US-A- 2 850 258

## Beschreibung

Die Erfindung betrifft ein Mehrwege-Doppelsitzventil entsprechend dem Oberbegriff des Anspruchs 1.

Wird bei einem solchen Mehrwege-Doppelsitzventil, beispielsweise einem 4/2- oder 4/3-Magnetsitzventil, wie es aus der Praxis bekannt ist, die Magnetkraft benutzt, um über die Untersetzungshebel beide an derselben Seite der Schwenklagerung der Untersetzungshebel nebeneinander platzierten Schließglieder synchron und parallel in die Schließpositionen auf die Sitze zu bringen und in den Schließpositionen mit vorbestimmten Schließkräften zu halten, dann werden für die zwei nebeneinander platzierten Schließglieder zwei separate Magneten benötigt, da ein gemeinsamer Magnet nicht in der Lage ist, die Schließpositionen bzw. Schließkräfte für beide Schließelemente gleichzeitig zuverlässig sicherzustellen. Die Schließpositionen an den Sitzen können nämlich toleranzabhängig verschieden sein, so dass mit einem gemeinsamen Magneten ein Schließglied seine Schließposition nicht korrekt erreichen bzw. in der Schließposition nicht mit der korrekten Schließkraft beaufschlagt würde. Nur wenn die Schließglieder eines solchen Mehrwege-Doppelsitzventils durch Magnetkraft gegen Federkraft aus den Schließpositionen in Offenstellungen bewegt werden, kann ein gemeinsamer Magnet verwendet werden, der die beiden Schließglieder über zwei getrennte steife Untersetzungshebel oder einen steifen einstückigen Doppel-Untersetzungshebel betätigt. Denn die Öffnungspositionen der beiden nebeneinander platzierten Schließglieder ergeben sich aus der Federkraft und der Magnetkraft, und hängen nicht von den Positionen der Sitze ab.

Bei einem aus US 2 600 872 A bekannten Doppelsitzventil mit einem Doppel-Untersetzungshebel und einem gemeinsamen Magneten befinden sich die beiden Schließglieder an beiden Seiten der Schwenkachse des Hebels. Wenn der Magnet anzieht, wird das eine Schließglied aus der Schließposition vom Sitz abgehoben, während das andere in der Schließposition am Sitz bleibt. Die Schließpositionen und Schließkräfte beider Schließglieder werden von separaten Schließfedern eingestellt. Wird der Magnet entregt, dann schwenkt eine Rückstellfeder den Doppel-Untersetzungshebel in der Gegenrichtung, so dass das eine Schließglied wieder in seiner Schließposition von der Schließfeder an den Sitz angepresst, hingegen das andere Schließglied gegen die Kraft seiner Schließfeder aus der Schließposition vom Sitz abgehoben wird. Die kinematische Kraftübertragungskette vom Anker des Magneten über den Doppel-Untersetzungshebel zu dem jeweiligen Schließglied ist starr, d.h. enthält kein Federglied. Toleranzabhängig verschiedene Schließpositionen haben keinen Einfluss auf die Ventilfunktion, da der gemeinsame Magnet nur jeweils die Schließposition eines Schließgliedes durch dessen Schließfeder einstellen lässt und der Doppel-Untersetzungshebel mit diesem Schließglied in der Schließposition nicht mehr in Kontakt ist, während er das andere Schließglied in der Öffnungsstellung hält.

Bei einem aus US 2 850 258 A bekannten Einfachsitzventil wird der Anker des Magneten von einem Arm eines zweiarmigen schwenkgelagerten Hebels gebildet, dessen anderer Arm durch eine Zugfeder entgegen der Anzugsrichtung des Magneten beaufschlagt ist. Mit dem einen Arm ist ein weiterer Winkelhebel starr verbunden, dessen einer Schenkel sich zum einzigen Schließglied erstreckt. Das Schließglied ist über eine Kupplungsplatte mit Spiel mit dem einen Schenkel verbunden. Die Kupplungsplatte kann sich auf einem im Schenkel verankerten Bolzen verschieben und wird durch eine an einem Kopf des Bolzens abgestützte Druckfeder gegen den Schenkel gepresst. Ein in der Kupplungsplatte verankerter Stift ist axial verschiebbar mit dem Schließglied verbunden, wobei zwischen der Kupplungsplatte und dem Schließglied eine Spiralfeder zentrierend angeordnet ist. Die Schließposition wird von der Zugfeder eingestellt. Die Schließkraft hängt ab von der Kraft der Zugfeder und dem Druck, der das Schließglied auf den Sitz presst. Wenn der Magnet anzieht, werden zunächst der zweiarmige Hebel verschwenkt und danach das Schließglied über den Hebel vom Sitz abgehoben, nachdem die Kupplungsplatte am Bolzen abgefangen wurde. Die volle Magnetkraft wird erst dann direkt auf das Schließglied übertragen, weil die Druckfeder am Bolzen des Schenkels auf Block ist.

Aus EP 1 036 965 B ist ein Mehrwege-Doppelsitzventil, d.h. ein 4/2-Wegesitzventil, bekannt, bei beiden nebeneinander platzierten Schließgliedern ein gemeinsamer Magnet zugeordnet ist, der die beiden Schließglieder über ein waagebalkenartiges Ausgleichselement beaufschlagt. Die Magnetkraft des erregten Magneten wird jedoch dazu eingesetzt, die beiden Schließglieder gegen Federkraft ihrer Schließfedern aus den Schließpositionen in die Öffnungspositionen zu verstellen. Die Offnungspositionen werden erreicht, sobald ein Gleichgewicht zwischen der Magnetkraft und der Federkraft eintritt bzw. der Anker das Hubende erreicht hat. Toleranzabhängig verschiedene Schließpositionen der beiden Schließglieder beeinträchtigen die Magnet-Öffnungsfunktion nicht, da jede Schließposition und jede Schließkraft von der dem jeweiligen Schließglied eigenen Schließfeder am Sitz eingestellt wird.

Von Interesse sind ferner: EP 1 039 182 A und DE 198 33 744 C.

Der Erfindung liegt die Aufgabe zugrunde, ein baulich vereinfachtes Mehrwege-Doppelsitzventil der eingangs genannten Art anzugeben.

Die gestellte Aufgabe wird mit den Merkmalen des Anspruchs 1 gelöst.

Für das Schließglied, das der erregte Magnet in die Schließstellung bringt, definiert das zwischen dem Magneten und dem Schließglied verformte Federglied zuverlässig die Schließposition und die Schließkraft, unabhängig davon, was mit dem anderen Schließglied passiert. Das Federglied ist direkt in den Untersetzungshebel integriert, beispielsweise als Sollbiegebereich, in dem sich der Untersetzungshebel biegt, wenn der Magnet ganz angezogen hat. Da auch Einsatzfälle denkbar sind, in denen nur ein Schließglied in die Schließposition zu bringen ist, wäre dann das andere, gegen Federkraft über das verformte Federglied verstellte Schließglied in der Öffnungsposition in einem Kraftgleichgewicht zwischen der Feder und dem Federglied. Gegebenenfalls könnte für dieses andere, vom Magneten zu öffnende Schließglied ein Federglied sogar entfallen. Da trotz der Schließfunktion des für beide Schließglieder gemeinsamen Magneten die Magnetkraft und der Magnethub nicht allein zum Einstellen der jeweiligen Schließposition bzw. Erzeugen der jeweiligen Schließkraft benutzt werden, sondern auch das in den Untersetzungshebel integrierte Federglied, kann für jedes Schließglied die Schließposition und die Schließkraft individuell sein, vorausgesetzt, die Magnetkraft ist größer als die Summe der Verformungskraft des zumindest einen Federgliedes. Sind beide Schließglieder vom Magneten in ihre Schließpositionen gebracht, dann sind gegebenenfalls beide Federglieder verformt, so dass jedes Federglied für sich die Schließposition des ihm zugeordneten Schließgliedes und auch die erforderliche Schließkraft erzeugt. Die Schließglieder sind bezüglich anstehendem Druck meist ohnedies druckausgeglichen. Dank des in den Untersetzungshebel integrierten Federgliedes wird trotz des einzigen gemeinsamen Magneten jedes Schließglied individuell betätigt. Ein einziger gemeinsamer Magnet für die eine oder beide Schließfunktionen der beiden Schließglieder bedeutet eine erhebliche bauliche Vereinfachung gegenüber solchen Ventilen mit zwei Magneten.

Wenn die Schließglieder beider Ventile vom gemeinsamen Magneten in ihre Schließstellungen gebracht werden sollen, können in beide Untersetzungshebel Federglieder integriert sein.

Zwei separate Untersetzungshebel sind vorteilhaft, weil die jeweiligen Verformungen der Federglieder einander nicht beeinflussen. Es ist aber auch möglich, die beiden Untersetzungshebel als einen einzigen Doppel-Untersetzungshebel auszubilden, der ein Ankerbetätigungsende und zwei Schließgliedbetätigungsenden aufweist, und sich, beispielsweise, gabelartig aufzweigt. Das jeweilige Federglied könnte in einen Gabelzinken integriert sein.

Um günstige Kraftübertragungsverhältnisse sicherzustellen, ist es zweckmäßig, das Ankerbetätigungsende des Untersetzungshebels an einer am Anker gelagerten Rolle anliegen zu lassen.

Wenn die beiden Schließglieder über Stößel betätigt werden, ist im Hinblick auf einwandfreie Kraftübertragungsverhältnisse eine Gleitkappe an jedem Stößel zweckmäßig, die an dem Schließgliedbetätigungsende des jeweiligen Untersetzungshebels anliegt.

Bei einer einfachen Ausführungsform mit relativ starker Untersetzung des zum Magnethub Schließgliedhubs, z.B. im Bereich von ca. 1 : 5, wird jeder Untersetzungshebel L-förmig und mit einem Querschnitt ausgebildet, der im Bereich der Schwenklagerung des Untersetzungshebels und des Schließgliedbetätigungsendes größer ist als im weiteren Verlauf. Dadurch lässt sich innerhalb des weiteren Verlaufs des Untersetzungshebels eine Art Biegefeder mit einer vorbestimmten Federcharakteristik vorsehen.

Im Regelfall können die Federglieder gleiche Federcharakteristika haben. Da gegebenenfalls aber die Schließglieder unterschiedliche Schließkräfte benötigen, oder nur ein Schließglied eine bestimmte Schließkraft aus der Magnetkraft benötigt, können die Federcharakteristika der Federglieder auch voneinander verschieden gewählt werden.

Anhand der Zeichnungen werden Ausführungsformen des Erfindungsgegenstandes erläutert. Es zeigen:
- Fig. 1: als eine nicht beschränkende Auswahl für Mehrwege- Doppelsitzventile mit Magnetbetätigung zwei 4/2-Magnetsitzventile in Symboldarstellung, jeweils mit einem einzigen Magneten, und in nicht erregtem Zustand,
- Fig. 2: einen Vertikalteilschnitt eines 4/2-Magnetsitzventils, in etwa entsprechend der linken Darstellung in Fig. 1, in konstruktiver Durchbildung, und in der Bewegungsebene eines Schließglieds,
- Fig. 3: einen Schnitt ähnlich dem von Fig. 2 in der Schnittebene eines zweiten Schließgliedes, und
- Fig. 4: eine Schnittdarstellung in der Schnittebene IV - IV in Fig. 2.

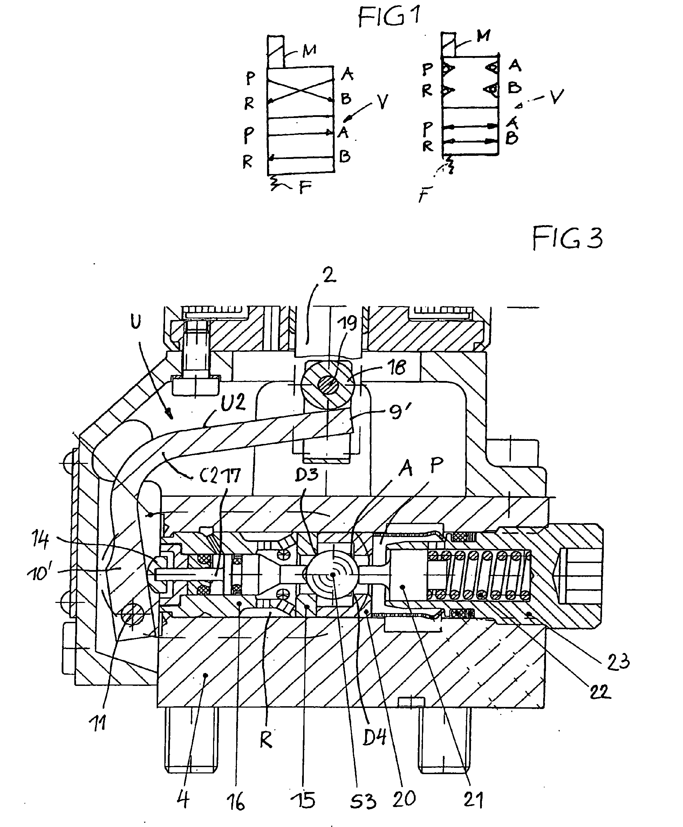

Die linken und rechten Symboldarstellungen von 4/2-Magnetsitzventilen V in Fig. 1 stellen eine Auswahl aus mehreren Möglichkeiten zur Gestaltung und Funktion solcher Mehrwege- Doppelsitzventile mit Magnetbetätigung dar. In der linken Symboldarstellung in Fig. 1 weist das 4/2-Magnetsitz-ventil V einen einzigen Magneten M auf, der gegen die Kraft einer Feder F arbeitet, und das Ventil V aus der durch die Feder F eingestellten Schaltstellung (Druckseite P mit Verbraucherseite A verbunden, Verbraucherseite B mit Rücklaufseite R verbunden) in die andere Schaltstellung umstellt (Druckseite P mit Verbraucherseite B verbunden, Verbraucherseite A mit Rücklaufseite R verbunden).

In der rechten Symboldarstellung in Fig. 1 dient der einzige Magnet M dazu, das Ventil V aus der durch die Feder F eingestellten Schaltstellung (Druckseite P mit Verbraucherseite A verbunden, Verbraucherseite B mit Rücklaufseite R verbunden) in die andere Schaltstellung (Druckseite P von Verbraucherseite A getrennt, Verbraucherseite B von Rücklaufseite R getrennt) umzustellen.

Obwohl in beiden 4/2-Magnetsitzventilen, die als Auswahl in Fig. 1 symbolisch dargestellt sind, der Magnet M dazu dient, mindestens ein Schließglied, oder sogar beide Schließglieder, in die Schließposition zu bringen und in der Schließposition eine bestimmte Schließkraft zu erzeugen, ist dennoch nur ein einziger gemeinsamer Magnet M vorgesehen.

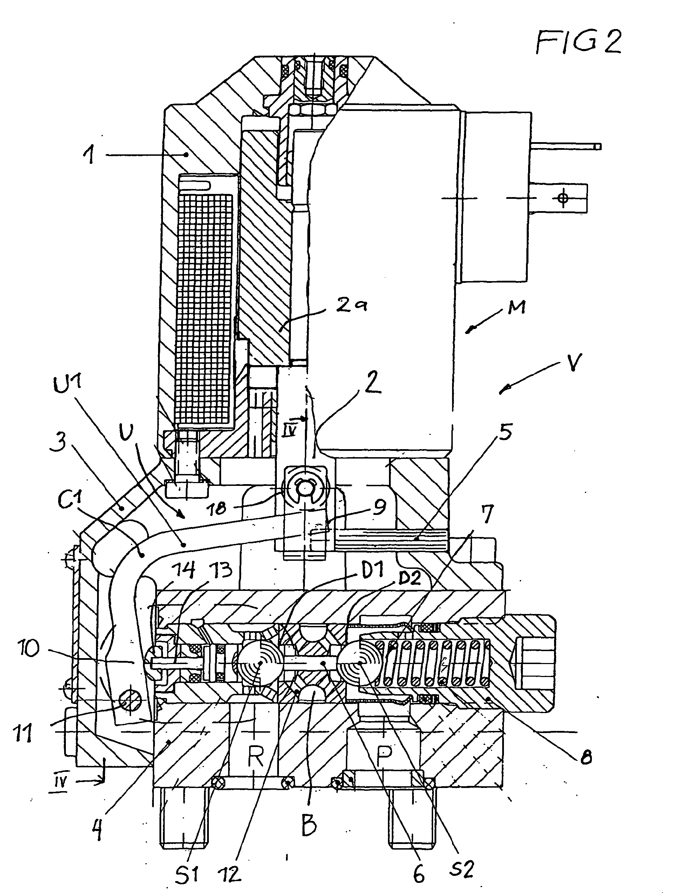

Die Fig. 2 bis 4 verdeutlichen den Innenaufbau eines Mehrwege- Doppelsitzventils, z.B. des 4/2-Magnetsitzventils V entsprechend der linken Symboldarstellung von Fig. 1.

Der Magnet M ist in den Fig. 2 und 3 mit einem Gehäuse 1 auf einem Zwischengehäuse 3 befestigt, das an einem Ventilgehäuse 4 festgelegt ist. Der Magnet M enthält einen Anker 2 mit damit verbundenem beweglichem Kem 2a, der in Fig. 2 aus der gezeigten oberen Endposition nach unten verstellbar ist und dabei eine bestimmte Magnetkraft erzeugt. Im Zwischengehäuse 3 ist ein Stift 5 angeordnet, der zur Drehsicherung des Ankers 2 dient. In der Schnittdarstellung in Fig. 2 ist zwischen zwei als Kugeln ausgebildeten Schließgliedern S1, S2 ein Stößel 6 eingesetzt. Beide Schließglieder S1, S2 werden durch die Feder 7, die in einer Einschraubmutter 8 abgestützt ist, in Fig. 2 nach links beaufschlagt (Funktion der Feder F in Fig. 1).

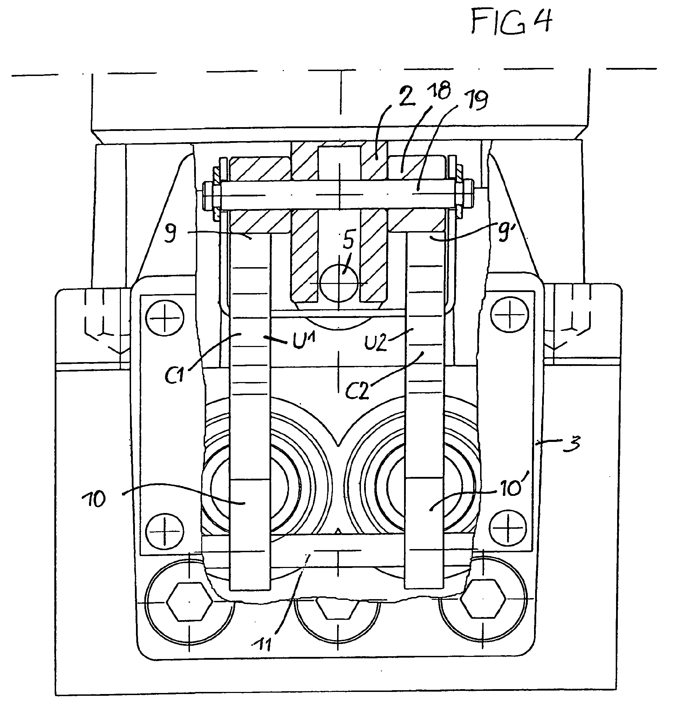

Die Bewegung des Ankers 2 wird über einen Untersetzungshebel U1 einer Untersetzungshebelanordnung U auf die beiden Schließglieder S1, S2 übertragen. Der Untersetzungshebel U1 besitzt ein Ankerbetätigungsende 9, mit dem er an einer Rolle 18 anliegt, die über einen Stift 19 am Anker 2 gelagert ist (Fig. 4), und ein Schließgliedbetätigungsende 10, das an eine Schwenklagerung mit einer Schwenkachse 11 im Zwischengehäuse 3 angrenzt. An dem Schließgliedbetätigungsende 10 liegt eine Gleitkappe 14 an, die auf einen Stößel 13 aufgesteckt ist, der auf das eine Schließglied S1 der beiden Schließglieder S1, S2 einwirkt. Jedem Schließglied ist wenigstens ein Ventilsitz zugeordnet, und zwar dem Schließglied S1 der Sitz D1, und dem Schließglied S2 der Sitz D2. Im Ventilgehäuse 4 ist ein Anschluss R zur Rücklaufseite und ein Anschluss P zur Druckseite vorgesehen. Dazwischen befindet sich die Verbraucherseite B, die über schräge Bohrungen 12 von den Sitzen D1, D2 druckbeaufschlagbar ist. Der Sitz D1 befindet sich somit zwischen der Rücklaufseite R und der Verbraucherseite B, während sich der Sitz D2 zwischen der Verbraucherseite B und der Druckseite P befindet.

Der Untersetzungshebel U1 hat im Bereich des Schließgliedbetätigungsendes 10 und der Schwenklagerung 11 einen größeren Querschnitt als im weiteren Verlauf bis zum Ankerbetätigungsende 9. In diesem weiteren Verlauf ist in den Untersetzungshebel U1 ein Federglied C1 integriert, nach Art einer Biegefeder mit einer vorbestimmten Federcharakteristik.

In der gezeigten Schaltstellung in Fig. 2 wird das Schließglied S2 durch die Feder 7 an den Sitz D angepresst, während das Schließglied S1 vom Sitz D abgehoben ist. Die Druckseite P ist somit von der Verbraucherseite B getrennt, während die Verbraucherseite B mit der Rücklaufseite R kommuniziert.

Wird der Magnet M erregt, dann bewegt sich der Anker 2 nach unten, und zwar weiter, als es zum Erreichen der Schließposition, z.B. dieses Schließgliedes S2, erforderlich wäre. Der Untersetzungshebel U1 untersetzt den Ankerhub auf einen kleineren Schließgliedhub, wodurch die für das Schließglied S1 wirksame Kraft erhöht wird. Der Stößel 13 bewegt das Schließglied S1 in die Schließposition auf den Sitz D1 und hält in der Schließposition eine bestimmte Schließkraft aufrecht. Gleichzeitig wird das Schließglied S2 vom Sitz D2 abgehoben. Die Verbraucherseite B ist nunmehr von der Rücklaufseite R getrennt und über den Sitz D2 mit der Druckseite P verbunden. Die Schließkraft ist größer als die Kraft der Feder 7. Das Schließglied S1 ist in der Schließposition druckausgeglichen. Die Magnetkraft und die Federcharakteristik des Federgliedes C1 sind z.B. so gewählt, dass in der Schließposition des Schließgliedes S1 das Federglied C1 verformt ist.

In Fig. 3 ist in einem Schnitt ähnlich dem von Fig. 2 ein weiteres Schließglied S3 im Ventilgehäuse 4 erkennbar, das wahlweise mit einem von zwei sich gegenüberliegenden Sitzen D3, D4 zusammenwirkt, um in der jeweiligen Schließposition mit vorgestimmter Schließkraft die Verbindung von der zwischen den Sitzen D3, D4 mündenden Verbraucherseite A und entweder der Rücklaufseite R oder der Druckseite P abzusperren. Der Sitz D3 ist in einem Einsatzring 15 geformt, während der Sitz D4 in einem Hülseneinsatz 20 geformt ist. In einer Führungshülse 16 ist ein Stößel 17 zum Bewegen des Schließgliedes S3 abgedichtet verschiebbar geführt, der am Ende eine Gleitkappe 14 trägt, die an einem Schließgliedbetätigungsende 10' eines zweiten Untersetzungshebels U2 anliegt, der in der Schwenklagerung 11 des Zwischengehäuses 3 schwenkbar abgestützt ist und mit seinem Ankerbetätigungsende 9' an der Rolle 18 am Anker 2 anliegt. Der Untersetzungshebel U2 kann analog zum Untersetzungshebel U1 mit einem integrierten Federglied C2, einer Art Biegefeder, ausgestattet sein. Es ist allerdings denkbar, die eine Schließposition dieses Schließgliedes S3 über den Magneten M zu definieren, und das Federglied C2 wegzulassen. Das Schließglied S3 wird von einer Feder 22 (Federfunktion F in der linken Symboldarstellung in Fig. 1) über einen Kolben 21 in Richtung zum Sitz D3 beaufschlagt, auf dem es bei nicht erregtem Magneten M die andere Schließposition mit der von der Feder 22 erzeugten Schließkraft hält. Die Feder 22 ist in einem Widerlager 23 abgestützt. Die Rücklaufseite R ist von der Verbraucherseite A getrennt, während die Verbraucherseite A über den Sitz D4 mit der Druckseite P verbunden ist.

Wird nun der Magnet M erregt, dann bewegt sich der Anker 2 nach unten. Der Untersetzungshebel U2, der beispielsweise ein Untersetzungsverhältnis von ca. 1 : 5, vorzugsweise 1 : 4,46, hat, löst das Schließglied S3 vom Sitz D3 und bringt es in die Schließposition auf den Sitz D4. Dabei wird eine vorbestimmte Schließkraft erzeugt und gehalten. Nun ist die Verbraucherseite A mit der Rücklaufseite R verbunden, während die Druckseite P gegenüber der Verbraucherseite A abgesperrt ist. Der Untersetzungshebel U2 muss die Kraft der Feder 22 überwinden. Der auf dem Schließglied S3 wirkende Druck der Druckseite P ist am Schließglied S3 ausgeglichen. In der Schließposition des Schließgliedes S3 am Sitz D4 hat der Anker 2 zumindest in etwa seine Hubendstellung erreicht, und ist das Federglied C2 im Untersetzungshebel U2, falls vorhanden, verformt.

In Fig. 4 sind auf dem Stift 19 im Anker 2 die beiden Rollen 18 gelagert, an denen die Ankerbetätigungsenden 9, 9' der beiden Untersetzungshebel U1, U2 anliegen, während die Schließgliedbetätigungsenden 10, 10' auf die in der Ansicht der Fig. 4 nicht sichtbaren Stößel 13, 17 ausgerichtet sind. Die Achse 11 im Zwischengehäuse 3 ist für beide Untersetzungshebel U1, U2 vorgesehen. Der Stift 5 zur Drehsicherung des Ankers 2 greift in einen Schlitz des Ankers ein.

Abweichend von der gezeigten Ausführungsform können die beiden Untersetzungshebel U1, U2 auch in einen Doppel-Untersetzungshebel zusammengefasst werden, der dann ein einziges Ankerbetätigungsende und zwei Schließgliedbetätigungsenden besitzt. Ein solcher Doppel-Untersetzungshebel könnte gabelartig ausgebildet sein und in zumindest einem Gabelzinken eine integrierte Biegefeder als das Federglied C1 bzw. C2 enthalten.

Ferner ist es möglich, abgeändert gegenüber dem gezeigten Ausführungsbeispiel, das jeweilige Federglied C1, C2 separat auszubilden und entweder zwischen dem Ankerbetätigungsende und dem Anker oder zwischen dem Schließgliedbetätigungsende und dem Schließglied anzuordnen. Die Funktion wäre dieselbe.

## Patentansprüche

1. Mehrwege-Doppelsitzventil, mit mindestens zwei jeweils wenigstens einem Sitz (D1, D2, D3, D4) zugeordneten Schließgliedern (S1, S2, S3), von denen zumindest eines bei Magneterregung durch einen von zwei schwenkbar gelagerten Untersetzungshebeln (U1, U2) gegen Federkraft (22, 7) eine Schließposition mit vorbestimmter Schließkraft am Sitz einnimmt, wobei beiden Schließgliedern (S1, S2, S3) ein gemeinsamer Magnet (M) zugeordnet ist, dessen Anker (2) beide Untersetzungshebel (U1, U2) beaufschlagt, **dadurch gekennzeichnet, dass** beide Schließglieder (S1, S2, S3) vom gemeinsamen Magneten (M) gegen die Federkraft (22, 7) synchron und parallel betätigbar sind, und dass in der kinematischen Magnetkraft-Übertragungskette vom Anker (2) zu dem zumindest einen Schließglied (S1, S2, S3) ein in den Untersetzungshebel (U1, U2) zwischen einem Ankerbetätigungs-Ende (9, 9') und einem Schließgliedbetätigungsende (10, 10') des Untersetzungshebels (U1, U2) integriertes Federglied (C1, C2) vorgesehen ist, dessen Federcharakteristik so auf die Magnetkraft und/oder den Ankerhub und/oder die Hebeluntersetzung und/oder die vorbestimmte Schließkraft abgestimmt ist, dass das Federglied (C1, C2) in der Schließposition zumindest eines Schließglieds (S1, S2, S3) an einem Sitz (D1, D2, D3, D4) von der Magnetkraft verformt ist und ausschließlich das verformte Federglied aus der Magnetkraft die Schließkraft für das in der Schließposition befindliche Schließglied (S1, S2, S3) erzeugt.

2. Mehrwege-Doppelsitzventil nach Anspruch 1, **dadurch gekennzeichnet, dass** beiden parallel und synchron durch den gemeinsamen Magneten (M) in ihre Schließpositionen bringbaren Schließgliedern getrennte Federglieder (C1, C2) in den beiden Untersetzungshebeln (U1, U2) zugeordnet sind.

3. Mehrwege- Doppelsitzventil nach Anspruch 1, **dadurch gekennzeichnet, dass** das Federglied (C1, C2) ein Sollbiegebereich im Untersetzungshebel (U1, U2) ist.

4. Mehrwege-Doppelsitzventil nach Anspruch 1, **dadurch gekennzeichnet, dass** die beiden Untersetzungshebel (U1, U2) einen Doppel-Untersetzungshebel bilden, der ein einziges Ankerbetätigungsende und zwei Schließgliedbetätigungsenden aufweist.

5. Mehrwege-Doppelsitzventil nach Anspruch 1, **dadurch gekennzeichnet, dass** das Ankerbetätigungsende (9, 9') des Untersetzungshebels (U1, U2) an einer am Anker (2) gelagerten Rolle (18) anliegt.

6. Mehrwege-Doppelsitzventil nach Anspruch 1, **dadurch gekennzeichnet, dass** die Schließglieder (S1, S2, S3) durch Stößel (13, 17) betätigbar sind, und dass die Stößel Gleitkappen (14) tragen, an denen Schließgliedbetätigungsenden (10, 10') der Untersetzungshebel (U1, U2) anliegen.

7. Mehrwege-Doppelsitzventil nach Anspruch 1, **dadurch gekennzeichnet, dass** der Untersetzungshebel (U1, U2) L-förmig ausgebildet ist und im Bereich der Schwenklagerung (11) und des Schließgliedbetätigungsendes (10, 10') einen größeren Querschnitt aufweist, als im weiteren, das Federglied (C1, C2) enthaltenden Verlauf zwischen dem Schließgliedbetätigungsende (10, 10') und dem Ankerbetätigungsende (9, 9').

8. Mehrwege-Doppelsitzventil nach Anspruch 2, **dadurch gekennzeichnet, dass** die Federglieder (C1, C2) voneinander verschiedene Federcharakteristika aufweisen.

## Claims

1. Multi-way twin seat valve, comprising at least two closure members (S1, S2, S3) each associated to at least one valve seat (D1, D2, D3, D4), of which closure members at least one takes a closing position with predetermined closing force on the valve seat counter to a spring force (22, 7) when being actuated by one of two pivotably supported reduction levers (U1, U2) in an energized state of a solenoid, a single solenoid (M) commonly associated to both closure members (S1, S2, S3), the armature (2) of which solenoid (M) actuates both reduction levers (U1, U2) **characterised in that** both closure members (S1, S2, S3) are actuated counter to the spring force (22, 7) synchronously and parallel by the common solenoid (M), and that in the kinematic solenoid force transmission chain from the armature (2) to the at least one closure member (S1, S2, S3) a spring member (C1, C2) is provided integrated in the reduction lever (C1, C2) between an armature actuation end (9, 9') and a closure member actuating end (10, 10') of the reduction lever (U1, U2), the spring rate of which is adapted to the solenoid force and/or the armature stroke and/or the lever reduction and/or the predetermined closing force, such that the spring member (C1, C2) is deformed by the solenoid force in the closing position of at least one closure member (S1, S2, S3) on the valve seat (D1, D2, D3, D4) and exclusively the deformed spring member (C1, C2) is generating from the solenoid force the closing force for the closure member (S1, S2, S3) which is in the closing position.

2. Multi-way twin manifold seat valve, as in claim 1, **characterised in that** separate spring members (C1, C2) in both reduction levers (U1, U2) are functionally associated to both closure members which synchronously and parallel are brought in the closing positions by the common solenoid (M).

3. Multi-way twin manifold seat valve as in claim 1, **characterised in that** the spring member (C1, C2) is a rated bending point in the reduction lever (U1, U2).

4. Multi-way twin manifold seat valve as in claim 1, **characterised in that** both reduction levers (U1, U2) form a twin reduction lever having a single armature actuation end and two closure member actuating ends.

5. Multi-way twin manifold seat valve as in claim 1, **characterised in that** the armature actuation end (9, 9') of the reduction lever (U1, U2) abuts at a roller (18) supported at the armature (2).

6. Multi-way twin manifold seat valve as in claim 1, **characterised in that** the closure members (S1, S2, S3) are actuated by rams (13, 17), and that the rams carry sliding caps (14) at which the closure member actuating ends (10, 10') of the reduction levers (U1, U2) abut.

7. Multi-way twin manifold seat valve as in claim 1, **characterised in that** the reduction lever (U1, U2) is L-shaped and has a larger cross-section in the region of the pivot support (11) and of the closure member actuating end (10, 10') than in the further lever portion between the closure member actuating end (10, 10') and the armature actuation end (9, 9'), which further lever portion contains the rated bending portion.

8. Multi-way twin manifold seat valve as in claim 2, **characterised in that** the spring members (C1, C2) have different spring rates.

## Revendications

1. Soupape à double siège à plusieurs voies, comprenant au moins deux organes de fermeture (S1, S2, S3) associés respectivement à au moins un siège (D1, D2, D3, D4), organe dont l'un au moins, lors d'une impulsion magnétique, occupe sur le siège contre une force de ressort (22, 7), par l'un de deux leviers réducteurs montés pivotants (U1, U2), une position de fermeture avec une force de fermeture prédéfinie, un aimant commun (M), dont l'induit (2) sollicite les deux leviers réducteurs (U1, U2), étant associé aux deux organes de fermeture (S1, S2, S3), **caractérisée en ce que** les deux organes de fermeture (S1, S2, S3) sont actionnables en synchronisme et en parallèle par l'aimant commun (M) contre la force de ressort (22, 7), et que, dans la chaîne de transmission cinématique de la force magnétique de l'induit (2) à l'au moins un organe de fermeture (S1, S2, S3), il est prévu un élément élastique (C1, C2) intégré dans le levier réducteur (U1, U2) entre une extrémité (9, 9') d'actionnement d'induit et une extrémité (10, 10') d'actionnement d'organe de fermeture du levier réducteur (U1, U2), élément dont la caractéristique de ressort est adaptée à la force magnétique et/ou à la course d'induit et/ou à la réduction de levier et/ou à la force de fermeture prédéfinie de sorte que l'élément élastique (C1, C2), dans la position de fermeture d'au moins un organe de fermeture (S1, S2, S3) sur un siège (D1, D2, D3, D4), est déformé par la force magnétique et exclusivement l'élément élastique déformé génère à partir de la force magnétique la force de fermeture pour l'organe de fermeture (S1, S2, S3) situé dans la position de fermeture.

2. Soupape à double siège à plusieurs voies suivant la revendication 1, **caractérisée en ce que** des éléments élastiques (C1, C2) séparés sont associés dans les deux leviers réducteurs (U1, U2) aux deux organes de fermeture, qui peuvent être amenés en parallèle et en synchronisme par l'aimant commun (M) dans leurs positions de fermeture.

3. Soupape à double siège à plusieurs voies suivant la revendication 1, **caractérisée en ce que** l'élément élastique (C1, C2) est une zone de flexion de consigne dans le levier réducteur (U1, U2).

4. Soupape à double siège à plusieurs voies suivant la revendication 1, **caractérisée en ce que** les deux leviers réducteurs (U1, U2) forment un levier réducteur double, qui présente une extrémité d'actionnement d'induit unique et deux extrémités d'actionnement d'organe de fermeture.

5. Soupape à double siège à plusieurs voies suivant la revendication 1, **caractérisée en ce que** l'extrémité d'actionnement d'induit (9, 9') du levier réducteur (U1, U2) s'applique sur un galet (18) monté sur l'induit (2).

6. Soupape à double siège à plusieurs voies suivant la revendication 1, **caractérisée en ce que** les organes de fermeture (S1, S2, S3) sont actionnables par des poussoirs (13, 17), et que les poussoirs supportent des capuchons coulissants (14), sur lesquels s'appliquent des extrémités d'actionnement d'organe de fermeture (10, 10') des leviers réducteurs (U1, U2).

7. Soupape à double siège à plusieurs voies suivant la revendication 1, **caractérisée en ce que** le levier réducteur (U1, U2) a une configuration en L et présente dans la zone du support pivotant (11) et de l'extrémité d'actionnement d'organe de fermeture (10, 10') une section transversale plus grande que dans celle comportant l'élément élastique (C1, C2), entre l'extrémité d'actionnement d'organe de fermeture (10, 10') et l'extrémité d'actionnement d'induit (9, 9').

8. Soupape à double siège à plusieurs voies suivant la revendication 2, **caractérisée en ce que** les éléments élastiques (C1, C2) présentent des caractéristiques de ressort différentes l'une de l'autre.
